# EUROPÄISCHE PATENTSCHRIFT

(11) **EP 0 749 975 B1**
(45) Veröffentlichungstag und Bekanntmachung des Hinweises auf die Patenterteilung: **21.08.2002**
(21) Anmeldenummer: 96109833.2
(22) Anmeldetag: 19.06.1996
(51) Int. Cl.: C07F 17/00, C08F 4/60

(54) **Übergangsmetallverbindung**
Transition metal compound
Composé d'un métal de transition

(30) Priorität: 21.06.1995 DE 19522013
(43) Veröffentlichungstag der Anmeldung: 27.12.1996
(73) Patentinhaber: Basell Polyolefine GmbH, 67056 Ludwigshafen (DE)
(72) Erfinder: Riedel, Michael, Dr., 60529 Frankfurt (DE); Küber, Frank, Dr., 61440 Oberursel (DE); Aulbach, Michael, Dr., 65719 Hofheim (DE); Erker, Gerhard, Prof. Dr., 48159 Münster (DE); Könemann, Martin, Dr., 48161 Münster (DE)

(56) Entgegenhaltungen:
- EP-A- 0 520 732
- EP-A- 0 659 758
- EP-A- 0 682 037
- EP-A- 0 694 557
- EP-A- 0 705 849
- EP-A- 0 707 013
- EP-A- 0 742 046
- EP-A- 0 765 882
- EP-A- 0 796 267
- EP-A- 0 816 386
- WO-A-91/04257
- WO-A-95/25112
- WO-A-96/00734
- WO-A-96/08497
- WO-A-96/34001

## Beschreibung

Die vorliegende Erfindung betrifft eine stereorigide Übergangsmetallverbindung sowie ein Verfahren zur Herstellung von Polyolefinen in Gegenwart dieser stereorigiden Übergangsmetallverbindung.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP-A-129 368, EP-A-351 392).

Übergangsmetallverbindungen, bei denen ein π-Ligand durch ein Heteroatom (z.B. N, O, S oder P) ersetzt worden ist, sind bekannt (vgl. EP-A-416 815). Die Herstellung der dort beschriebenen Verbindungen erweist sich als schwierig und verläuft nur mit mäßigen Ausbeuten.

Bei Einsatz löslicher Metallocenverbindungen auf der Basis von Bis(cyclopentadienyl)zirkon-dialkyl bzw. -dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen-, Ethylen- oder eine Dimethylsilylenbrücke miteinander verbunden sind, können aufgrund ihrer konformativen Starrheit als Katalysatoren zur isospezifischen Polymerisation von Olefinen benutzt werden (Chem. Lett. 1989, S. 1853 bis 1856 oder EP-A-0 316 155). Besondere Bedeutung besitzen Übergangsmetallverbindungen mit (substituierten) Indenylresten als Liganden zur Herstellung hochisotaktischer Polymere mit hoher Kristallinität und hohem Schmelzpunkt (EP-A-485 823, EP-A-530 647).

Von großem Interesse sind Polymere, die in ihrem Eigenschaftsprofil zwischen diesen beiden Extremen liegen sowie bestimmte Olefincopolymere.

Es bestand die Aufgabe, eine Übergangsmetallverbindung zur Verfügung zu stellen, welche die Nachteile des Standes der Technik vermeidet.

Die vorliegende Erfindung betrifft somit eine Übergangsmetallverbindung der Formel I, 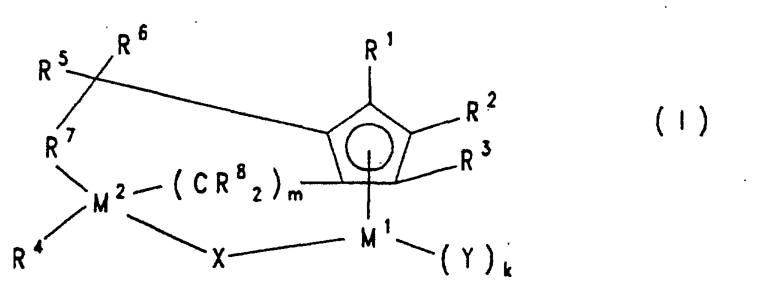 worin
M¹ ein Metall der Gruppe IIIb, IVb, Vb oder Vlb des Periodensystems der Elemente ist,
M² Kohlenstoff, Silizium, Germanium oder Bor ist,
X ein gegebenenfalls substituiertes Heteroatom ist wie -O-, -S-, NR⁹-, PR⁹-, -OR⁹, SR⁹, NR⁹₂ oder PR⁹₂, wobei R⁹ gleich oder verschieden sind und ein Wasserstoffatom oder eine C₁-C₂₀-Kohlenwasserstoffgruppe wie eine C₁-C₁₀-Alkylgruppe oder eine C₆-C₁₀-Arylgruppe bedeuten, oder zwei Reste R⁹ zusammen mit den sie verbindenden Atomen ein Ringsystem bilden können,
Y gleich oder verschieden sind und ein Wasserstoffatom, eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₂-C₁₂-Alkenyl-, ein C₇-C₄₀-Arylalkyl-, eine C₇-C₄₀-Alkylaryl- oder eine C₈-C₄₀-Arylalkenylgruppe, eine OH-Gruppe, ein Halogenatom oder -NR⁹₃, worin R⁹ ein Halogenatom, eine C₁-C₁₀ Alkylgruppe oder eine C₆-C₁₀ Arylgruppe ist, bedeuten,
k eine ganze Zahl ist, die der Wertigkeit des Übergangsmetallatoms M¹ minus zwei entspricht,
R¹, R² und R³ gleich oder verschieden sind und ein Wasserstoffatom, ein Halogenatom, eine C₁-C₂₀-kohlenstoffhaltige Gruppe wie eine C₁-C₁₀-Alkylgruppe, die halogeniert sein kann, eine C₆-C₂₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl- oder eine C₈-C₄₀-Arylalkenylgruppe, einen -SiR⁹₃-, NR⁹₂-, -Si(OR⁹)₃-, Si(SR⁹)₃- oder -PR⁹₂-Rest bedeuten, worin R⁹ ein Halogenatom, eine C₁-C₁₀ Alkylgruppe oder eine C₆-C₁₀ Arylgruppe ist, oder zwei oder mehr benachbarte Reste R¹, R² und R³ zusammen mit den sie verbindenden Atomen ein Ringsystem bilden, welches bevorzugt 4 bis 40, besonders bevorzugt 6 bis 15 Kohlenstoffatome enthält,
R⁴ ein Wasserstoffatom oder eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₆-C₂₀ Aryloxy, eine C₂-C₁₂-Alkenyl-, ein C₇-C₄₀-Arylalkyl-, eine C₇-C₄₀-Alkylaryl- oder eine C₈-C₄₀-Arylalkenylgruppe bedeutet, die jeweils Reste -NR⁹₃, SiR⁹₃-, SR⁹₂-, -OSiR⁹₃ tragen können, worin R⁹ ein Halogenatom, eine C₁-C₁₀ Alkylgruppe oder eine C₆-C₁₀ Arylgruppe ist,
R⁷ 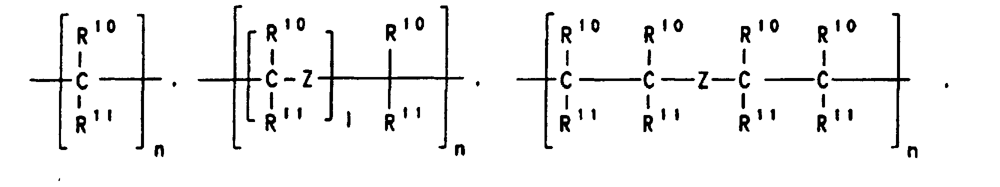 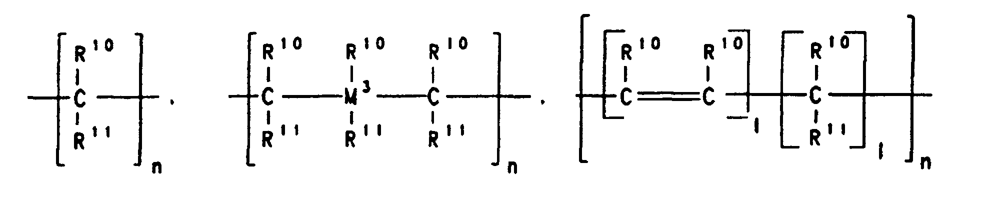 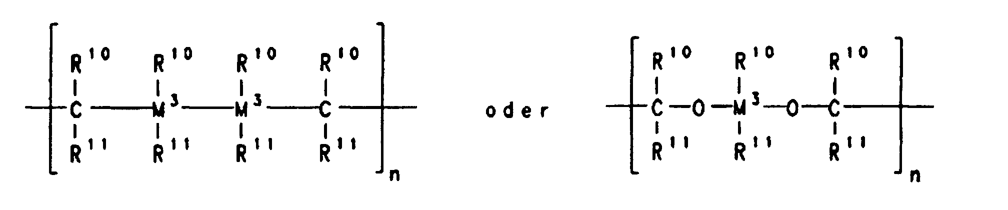 ist, wobei n eine ganze Zahl von 1 bis 20 ist, l ein ganze Zahl von 0 bis 20 ist,
Z gleich O, =NR⁹, =CO, =PR⁹, =P(O)R⁹, =SO, =SO² oder S ist, worin R⁹ ein Halogenatom, eine C₁-C₁₀-Alkylgruppe oder eine C₆-C₁₀-Arylgruppe ist,
R¹⁰ und R¹¹ gleich oder verschieden sind und ein Wasserstoffatom, ein Halogenatom, oder eine C₁-C₄₀-kohlenstoffhaltige Gruppe wie eine C₁-C₂₀-Alkyl-, eine C₁-C₁₀ Fluoralkyl, eine C₁-C₁₀-Alkoxy-, eine C₆-C₂₀-Aryl-, eine C₆-C₂₀-Fluoraryl, eine C₆-C₂₀-Aryloxy, eine C₂-C₁₂-Alkenyl-, ein C₇-C₄₀-Arylalkyl-, eine C₇-C₄₀-Alkylaryl- oder eine C₈-C₄₀-Arylalkenylgruppe bedeuten, oder jeweils zwei Reste R¹⁰, jeweils zwei Reste R¹¹, oder je ein Rest R¹⁰ und R¹¹ jeweils mit den sie verbindenden Atomen einen oder mehrere Ringe bilden, und M³ Silizium, Germanium oder Zinn ist,
R⁵ und R⁶ gleich oder verschieden sind und ein Wasserstoffatom oder eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₆-C₂₀ Aryloxy, eine C₂-C₁₂-Alkenyl-, eine C₇-C₄₀-Arylalkyl-, eine C₇-C₄₀-Alkylaryl- oder eine C₈-C₄₀-Arylalkenylgruppe bedeuten, die jeweils Reste -NR⁹₃, SiR⁹₃-, SR⁹₂-, -OSiR⁹₃ tragen können, worin R⁹ ein Halogenatom, eine gegebenenfalls halogenierte C₁-C₁₀ Alkylgruppe oder eine gegebenenfalls halogenierte C₆-C₁₀ Arylgruppe ist,
R⁸ gleich oder verschieden sind und ein Wasserstoffatom, ein Halogenatom oder eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₆-C₂₀ Aryloxy, eine C₂-C₁₂-Alkenyl-, eine C₇-C₄₀-Arylalkyl-, eine C₇-C₄₀-Alkylaryl-, oder eine C₈-C₄₀-Arylalkenylgruppe bedeuten, oder einer oder mehr Reste R⁸ mit einem oder mehr Resten R⁴, R⁵, R⁶ und R⁷ verbunden sind, und m eine ganze Zahl von 0 bis 24 ist.

Für Verbindungen der Formel I gilt bevorzugt, daß
M¹ ein Element der Gruppe IVb des Periodensystems der Elemente wie Titan, Zirkonium oder Hafnium, insbesondere Zirkonium ist,
X gleich NR⁹, NR⁹₂, PR⁹₂ oder PR⁹, insbesondere NR⁹ und PR⁹ ist, worin R⁹ bevorzugt eine C₁-C₄-Alkylgruppe oder eine C₆-C₁₀-Arylgruppe bedeutet,
Y gleich sind und eine C₁-C₄-Alkylgruppe oder ein Halogenatom, insbesondere Chlor bedeuten,
R¹, R² und R³ gleich oder verschieden sind und ein Wasserstoffatom, eine C₁-C₁₀-Alkylgruppe oder eine C₆-C₂₀-Arylgruppe sind, oder zwei benachbarte Reste R¹, R² und R³ zusammen mit den sie verbindenden Atomen ein aromatisches oder aliphatisches Kohlenwasserstoffringsystem bilden, welches vorzugsweise 4 bis 20 Kohlenstoffatome aufweist,
R⁴ ein Wasserstoffatom, eine C₆-C₂₀-Arylgruppe oder eine C₁-C₁₀-Alkylgruppe, insbesondere C₁-C₄-Alkylgruppe ist,
R⁷ 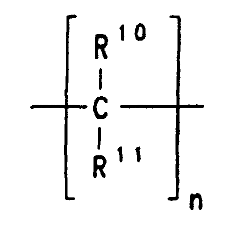 ist, wobei n eine ganze Zahl von 1 bis 8, insbesondere von 2 bis 4 ist, R¹⁰ und R¹¹ gleich oder verschieden sind und Wasserstoff oder eine C₁-C₁₀-Alkylgruppe sind, oder jeweils zwei Reste R¹⁰, jeweils zwei Reste R¹¹, oder je ein Rest R¹⁰ und R¹¹ zusammen mit den sie verbindenden Atomen ein Kohlenwasserstoffringsystem bilden,
M² Kohlenstoff ist,
R⁵ und R⁶ gleich oder verschieden sind und ein Wasserstoffatom, eine C₁-C₁₀-Alkylgruppe, insbesondere eine C₁-C₄-Alkylgruppe, oder eine C₆-C₁₀-Arylgruppe bedeuten und m = 0 ist.

Besonders bevorzugt sind Verbindungen der Formel I, worin M¹ Zirkonium ist,
X gleich NR⁹ ist, worin R⁹ eine C₁-C₄-Alkylgruppe wie Methyl, Ethyl, Propyl, Isopropyl, Butyl oder Isobutyl ist,
Y gleich sind und ein Halogenatom, insbesondere Chlor bedeuten,
R¹, R² und R³ gleich oder verschieden sind und Wasserstoff, eine C₁-C₄-Alkylgruppe wie Methyl, Ethyl, Propyl, Isopropyl, Butyl oder Isobutyl oder eine C₆-C₁₄-Arylgruppe wie Phenyl oder Naphthyl bedeuten, oder R¹ und R² oder R² und R³ mit den sie verbindenden Atomen ein aromatisches Kohlenwasserstoffringsystem bilden, insbesondere einen Sechsring, der seinerseits substituiert sein kann,
M² ein Kohlenstoffatom ist,
R⁴ eine C₁-C₆-Alkylgruppe, insbesondere Methyl, oder eine C₆-C₂₀-Arylgruppe, insbesondere Phenyl, ist,
R¹¹ -CH₂- oder -CH₂-CH₂- ist,
R⁵ und R⁶ gleich oder verschieden sind und eine Methylgruppe, eine Phenylgruppe oder Wasserstoff bedeuten und m = 0 ist.

Beispiele für erfindungsgemäße Übergangsmetallverbindungen sind:
4-(Methylamido)-7,7-dimethyl-4-phenyl-(η⁵-4,5,6,7-tetrahydroindenyl)-dichlorozirconium
4-(Methylamido)-7,7-dimethyl-4-phenyl-(η⁵-4,5,6,7-tetrahydroindenyl)-dichlorotitanium
4-(Methylamido)-4,7,7-trimethyl-(η⁵-4,5,6,7-tetrahydroindenyl)dichlorozirconium
4-(Methylamido)-4,7,7-trimethyl-(η⁵-4,5,6,7-tetrahydroindenyl)dichlorotitanium
4-(Methylamido)-7,7-dimethyl-(η⁵-4,5,6,7-tetrahydroindenyl)dichlorozirconium
4-(Methylamido)-7,7-dimethyl-(η⁵-4,5,6,7-tetrahydroindenyl)dichlorotitanium

4-(Methylamido)-4,7,7-triphenyl-(η⁵-4,5,6,7-tetrahydroindenyl)dichlorozirconium
4-(Methylamido)-4,7,7-triphenyl-(η⁵-4,5,6,7-tetrahydroindenyl)dichlorotitanium
4-(Methylamido)-4-methyl-7,7-diphenyl-(η⁵-4,5,6,7-tetrahydroindenyl)-dichlorozirconium
4-(Methylamido)-4-methyl-7,7-diphenyl-(η⁵-4,5,6,7-tetrahydroindenyl)-dichlorotitanium
4-(Methylamido)-7,7-triphenyl-(η⁵-4,5,6,7-tetrahydroindenyl)dichlorozirconium
4-(Methylamido)-7,7-diphenyl-(η⁵-4,5,6,7-tetrahydroindenyl)dichlorotitanium

4-(Methylamido)-6,6-dimethyl-4-phenyl-(η⁵-4,5-tetrahydropentalen)-dichlorozirconium
4-(Methylamido)-6,6-dimethyl-4-phenyl-(η⁵-4,5-tetrahydropentalen)-dichlorotitanium
4-(Methylamido)-4,6,6-trimethyl-(η⁵-4,5-tetrahydropentalen)dichlorozirconium
4-(Methylamido)-4,6,6-trimethyl-(η⁵-4,5-tetrahydropentalen)dichlorotitanium
4-(Methylamido)-6,6-dimethyl-(η⁵-4,5-tetrahydropentalen)dichlorozirconium
4-(Methylamido)-6,6-dimethyl-(η⁵-4,5-tetrahydropentalen)dichlorotitanium
4-(Methylamido)-4,6,6-triphenyl-(η⁵-4,5-tetrahydropentalen)dichlorozirconium
4-(Methylamido)-4,6,6-triphenyl-(η⁵-4,5-tetrahydropentalen)dichlorotitanium
4-(Methylamido)-4-methyl-6,6-diphenyl-(η⁵-4,5-tetrahydropentalen)-dichlorozirconium
4-(Methylamido)-4-methyl-6,6-diphenyl-(η⁵-4,5-tetrahydropentalen)dichlorotitanium
4-(Methylamido)-6,6-diphenyl-(η⁵-4,5-tetrahydropentalen)dichlorozirconium
4-(Methylamido)-6,6-diphenyl-(η⁵-4,5-tetrahydropentalen)dichlorotitanium

4-(Methylamido)-2-isopropyl-6,6-dimethyl-4-phenyl-(η⁵-4,5,6,7-tetrahydroindenyl)dichloro-zirconium
4-(Methylamido)-2-isopropyl-6, 6-dimethyl-4-phenyl-(η⁵-4,5,6,7-tetrahydroindenyl)dichloro-titanium

4-(Methylamido)-2-tert.-butyl-4,6,6-trimethyl-(η⁵-4,5-tetrahydropentalen)-dichlorozirconium
4-(Methylamido)-2-tert.-butyl-4,6,6-trimethyl-(η⁵-4,5-tetrahydropentalen)-dichlorotitanium.

Die Benennung der voranstehend genannten erfindungsgemäßen Übergangsmetallverbindungen soll anhand der Verbindung 4-(Methylamido)-2-isopropyl-4,6,6-trimethyl-(η⁵-4,5-tetrahydropentalen)-dichlorozirconium veranschaulicht werden. Das Ringsystem, welches den Cyclopentadienylrest mit dem Heteroatom verbindet, weist fünf Kohlenstoffatome (C4, C5, C6, C7, C8) und drei Methylsubstituenten auf. Die Cyclopentadienylgruppe trägt in 2-Position einen Isopropylrest und ist an das Ringsystem einfach anelliert, während das Heteroatom kovalent an das Ringsystem gebunden ist und einen Methylsubstituenten aufweist.

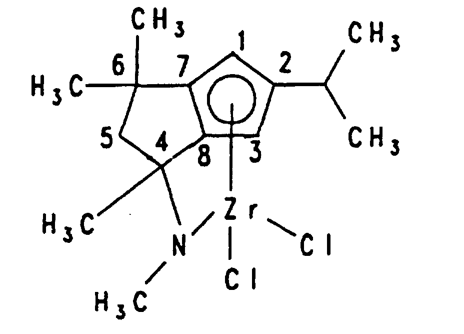

Die Herstellung der erfindungsgemäßen Übergangsmetallverbindung soll durch die nachfolgenden Reaktionsschemata anhand von Metallocenen der Formel VI und XIII veranschaulicht werden. Dabei bedeutet M⁴ ein Metall der Hauptgruppe la, IIa oder IIIa und R ist ein C₁-C₂₀-Kohlenwasserstoffrest wie C₁-C₁₀-Alkyl oder C₆-C₁₄-Aryl.

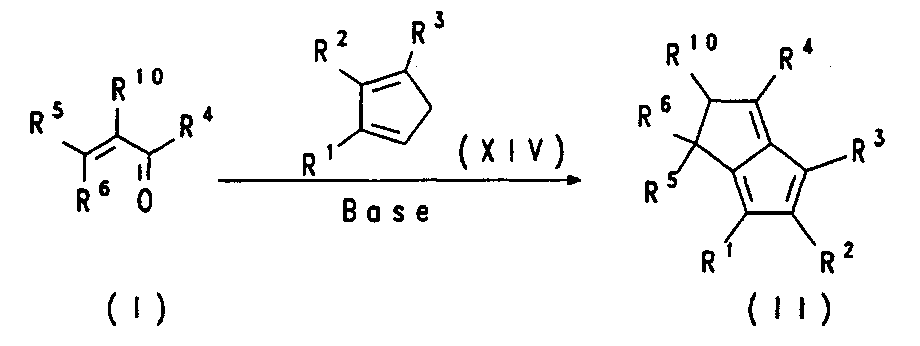

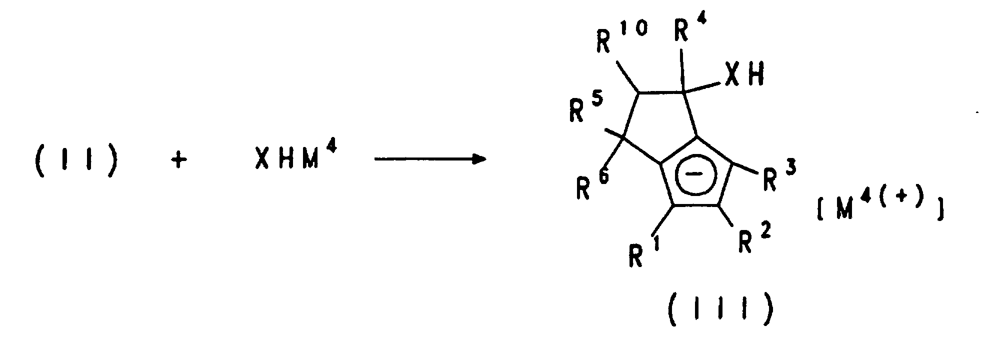

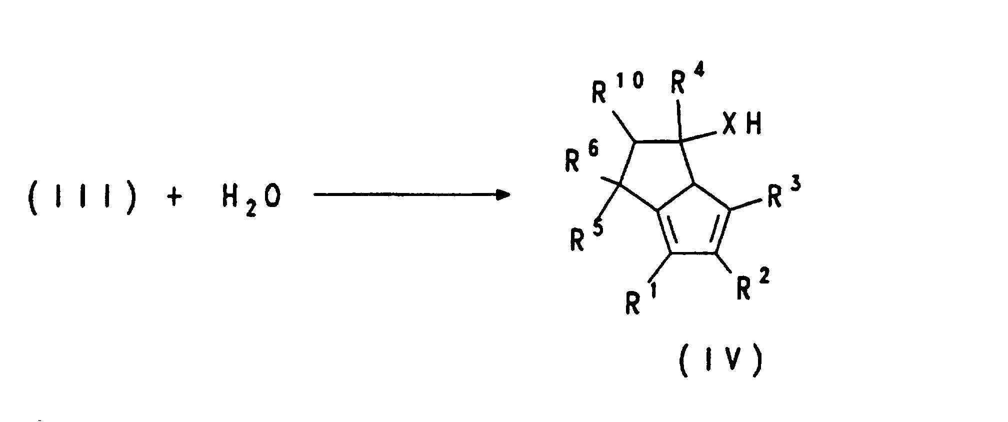

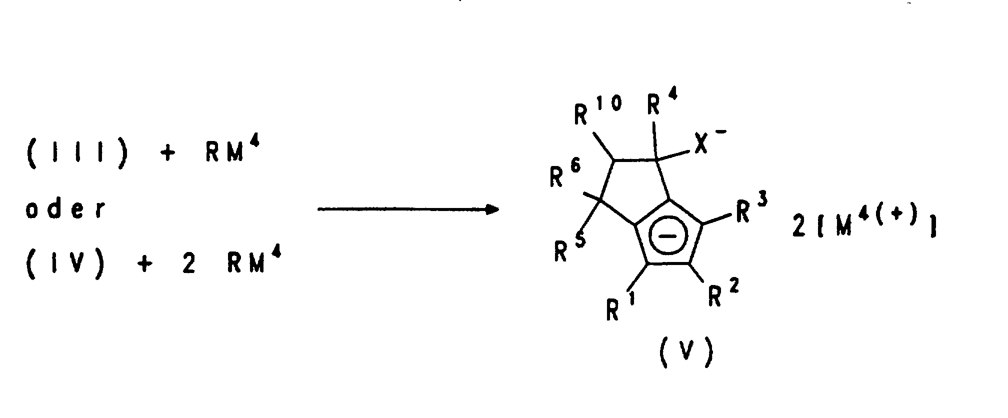

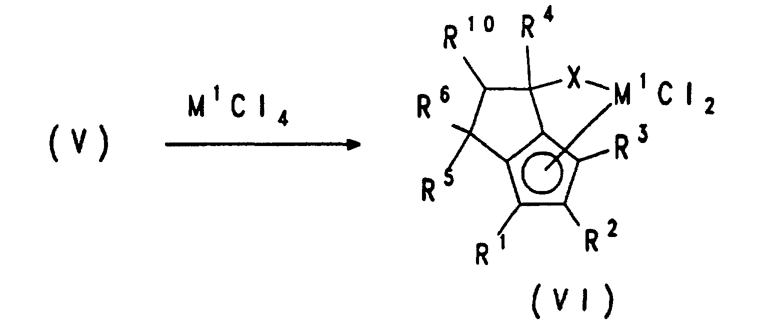

Die Verbindungen der Formel II können aus α,β-ungesättigten Ketonen (Chem: Ber. 1123, 549 (1990), J.Org. Chem. 54, 4981 (1989)) nach literaturbekannten Methoden hergestellt werden. Die Umsetzung der Verbindungen der Formel II zu dem Ligandsystem III erfolgt durch Umsetzung mit einer metallorganischen Verbindung (wie z.B. Lithium(methylamid), Natrium(tert-butylamid)) oder Grignardamidreagenzien.

Die Salze der Formel III können direkt zu den entsprechenden Dianionverbindungen der Formel V durch Deprotonierung mit beispielsweise Butyllithium umgesetzt werden. Die Hydrolyse der Verbindung III führt zur Bildung des Liganden IV, welche als Konstitutionsisomerengemisch anfällt und chromatographisch gereinigt werden kann. Durch zweifache Deprotonierung von IV mit beispielsweise Butyllithium wird die Dianionverbindung der Formel V gebildet.

Die Umsetzung zu den Übergangsmetallverbindungen der Formel VI sowie die Isolierung der gewünschten Komplexe ist im Prinzip bekannt. Hierzu wird das Dianion der Formel V in einem inerten Lösungsmittel mit dem entsprechenden Metallhalogenid wie z.B. Zirkoniumtetrachlorid umgesetzt.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenswasserstoffe wie beispielsweise o-Dichlorbenzol .

Eine weitere Möglichkeit zur Darstellung der erfindungsgemäßen Übergangsmetallverbindungen besteht in der Reaktion des Ligandvorläufers VIII mit Cyclopentadien zum Cyclisierungsprecursor IX, dessen Cyclisierung durch die Reaktion mit einer Organometallverbindung eingeleitet werden kann (wie z.B. Dimethyllithiumkupfer oder höhere Cuprate). Die Umsetzung von X zu XI erfolgt mit einer organometallischen Verbindung wie z.B. Lithium(methylamid), Natrium(tert.-butylamid) oder Grignardamidreagenzien.

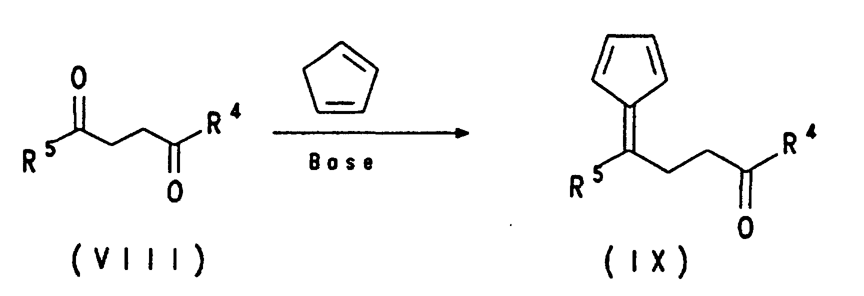

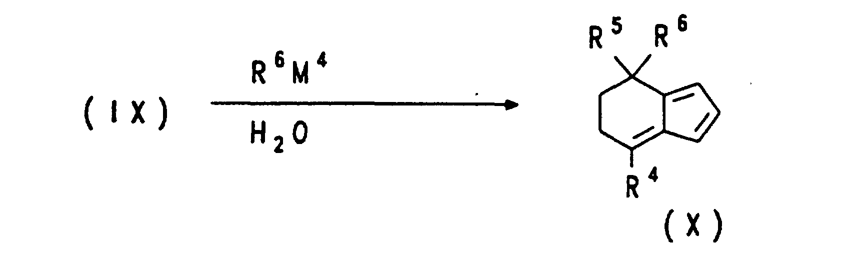

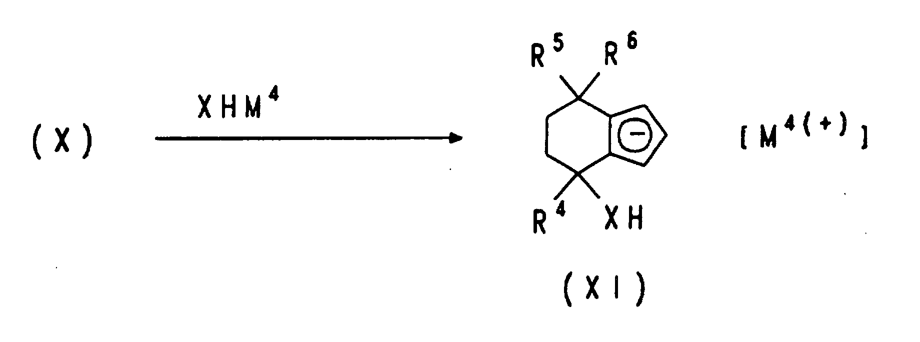

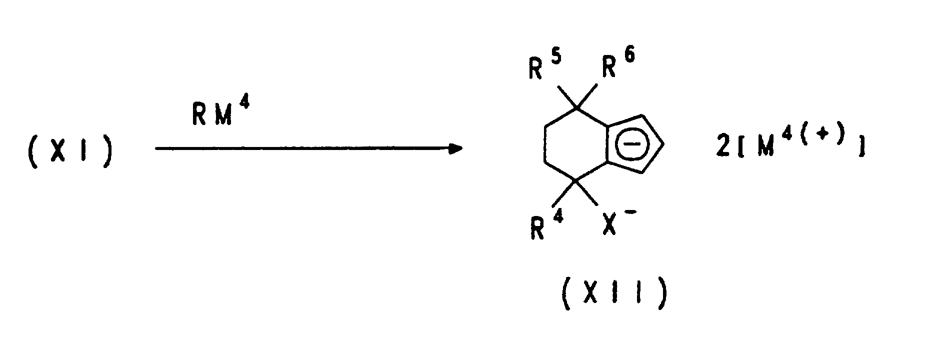

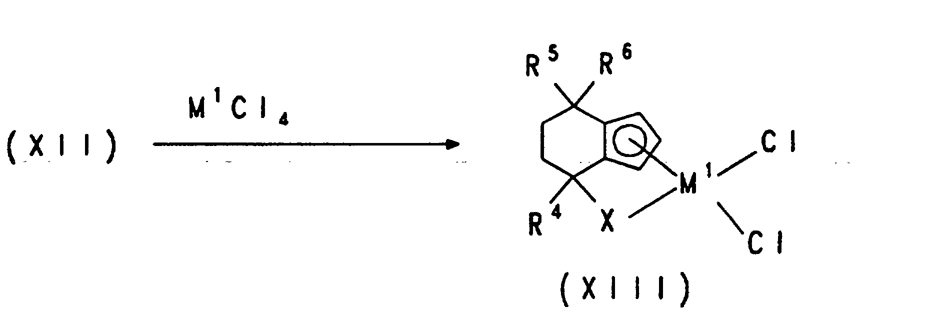

Die Dianionverbindungen der Formel XII können direkt durch Umsetzung von XI mit einem metallorganischen Reagenz (z.B. Butyllithium) erhalten werden.

Die Umsetzung zu den Übergangsmetallverbindungen der Formel XIII sowie die Isolierung der gewünschten Komplexe ist im Prinzip bekannt. Hierzu wird das Dianion der Formel V in einem inerten Lösungsmittel mit dem entsprechenden Metallhalogenid wie z. B. Zirkoniumtetrachlorid umgesetzt.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenswasserstoffe wie beispielsweise o-Dichlorbenzol.

Die erfindungsgemäßen Übergangsmetallverbindungen sind hochaktive Katalysatorkomponenten für die Olefinpolymerisation. Je nach Substitutionsmuster der Liganden können die Übergangsmetallverbindungen als Isomerengemisch anfallen. Die Übergangsmetallverbindungen werden bevorzugt isomerenrein eingesetzt, können aber auch als Isomerengemisch eingesetzt werden.

Die vorliegende Erfindung betrifft außerdem ein Verfahren zur Herstellung eines Polyolefins durch Polymerisation eines oder mehrerer Olefine in Gegenwart einer stereorigiden Übergangsmetallverbindung, die als Liganden eine Cyclopentadienylgruppe und ein gegebenenfalls substituiertes Heteroatom aufweist, welche über ein mono- oder polycyclisches Ringsystem miteinander verbunden sind, wobei die Cyclopentadienylgruppe an das mono- oder polycyclische Ringsystem anelliert ist. Unter dem Begriff Polymerisation wird eine Homopolymerisation wie auch eine Copolymerisation verstanden.

Bevorzugt werden in dem erfindungsgemäßen Verfahren eines oder mehrere Olefine der Formel R^{a}-CH=CH-R^{b} polymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atomen, bedeuten, oder R^{a} und R^{b} zusammen mit den sie verbindenden Atomen einen oder mehrere Ringe bilden. Beispiele für solche Olefine sind 1-Olefine mit 1 - 20 C-Atomen, wie Ethylen, Propen, 1-Buten, 1-Penten, 1-Hexen, 4-Methyl-1-penten oder 1-Octen, Styrol, cyclische oder acyclische Diene wie 1,3-Butadien, Isopren, 1,4-Hexadien, Norbornadien, Vinylnorbornen, 5-Ethylidennorbornen oder cyclische Monoolefine wie Norbornen oder Tetracyclododecen. Bevorzugt werden in dem erfindungsgemäßen Verfahren Ethylen oder Propylen homopolymerisiert oder Ethylen mit einem oder mehreren acyclischen 1-Olefinen mit 3 bis 20 C-Atomen, wie Propylen und/oder einem oder mehreren Dienen mit 4 bis 20 C-Atomen, wie 1,3-Butadien, copolymerisiert.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßen Verfahren eingesetzte Katalysator eine stereorigide Übergangsmetallverbindung. Es können auch Mischungen zweier oder mehrerer stereorigider Übergangsmetallverbindungen oder Mischungen mit Metallocenen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität die neutrale Übergangsmetallverbindung in ein Kation überführen und dieses stabilisieren kann ("labile Koordination"). Darüber hinaus soll der Cokatalysator oder das aus ihm gebildete Anion keine weiteren Reaktionen mit dem gebildeten Kation eingehen (EP-A-427 697). Als Cokatalysator wird bevorzugt eine Aluminiumverbindung und/oder eine Borverbindung verwendet.

Die Borverbindung hat bevorzugt die Formel R¹²ₓNH₄₋ₓBR¹³₄, R¹²ₓPH₄₋ₓBR¹³₄, R¹²₃CBR¹³₄ oder BR¹³₃, worin x eine Zahl von 1 bis 4, bevorzugt 3, bedeutet, die Reste R¹² gleich oder verschieden, bevorzugt gleich sind, und C₁-C₁₀-Alkyl oder C₆-C₁₈-Aryl sind, oder zwei Reste R¹² zusammen mit dem sie verbindenden Atomen einen Ring bilden, und die Reste R¹³ gleich oder verschieden, bevorzugt gleich sind, und C₆-C₁₈-Aryl sind, das durch Alkyl, Haloalkyl oder Fluor substituiert sein kann. Insbesondere steht R¹² für Ethyl, Propyl, Butyl oder Phenyl und R¹³ für Phenyl, Pentafluorphenyl, 3,5-Bistrifluormethylphenyl, Mesityl, Xylyl oder Tolyl (EP-A-277 003, EP-A-277 004 und EP-A-426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel lla für den linearen Typ und/oder der Formel IIb für den cyclischen Typ verwendet, 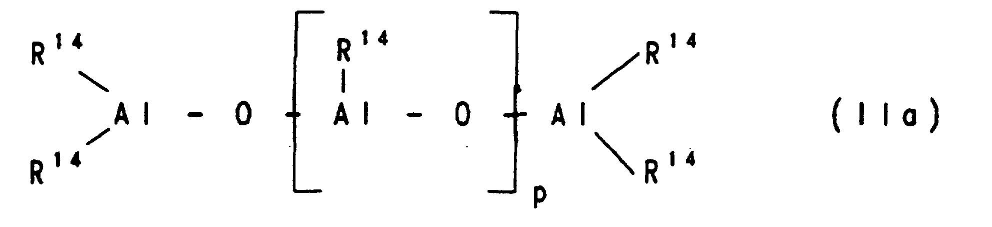 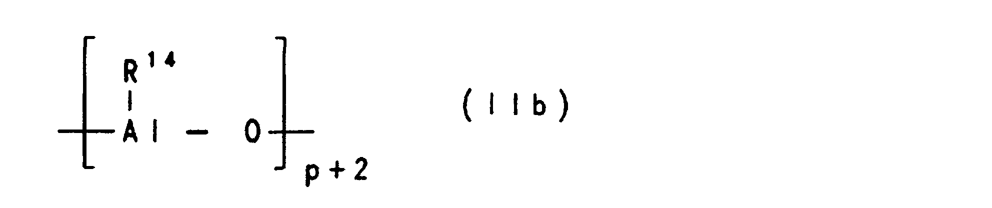 wobei in den Formeln IIa und llb die Reste R¹⁴ gleich oder verschieden sind und Wasserstoff oder eine C₁-C₂₀-Kohlenwasserstoffgruppe wie eine C₁-C₁₈-Alkylgruppe, eine C₆-C₁₈-Arylgruppe oder Benzyl bedeuten und p eine ganze Zahl von 2 bis 50, bevorzugt 10 bis 35 bedeutet.

Bevorzugt sind die Reste R¹⁴ gleich und bedeuten Wasserstoff, Methyl, Isobutyl, Phenyl oder Benzyl, besonders bevorzugt Methyl.

Sind die Reste R¹⁴ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R¹⁴) enthalten sind.

Die Verfahren zur Herstellung der Aluminoxane sind bekannt. Die genaue räumliche Struktur der Aluminoxane ist nicht bekannt (J. Am. Chem. Soc. (1993) 115. 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Übergangsmetallverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Übergangsmetallverbindung wird vorzugsweise in Lösung vorgenommen. Bevorzugt wird dabei die Übergangsmetallverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Die Übergangsmetallverbindung kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 150°C, vorzugsweise 0 bis 80°C.

Die Übergangsmetallverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Übergangsmetallverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R¹⁴ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Übergangsmetallverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

In dem erfindungsgemäßen Verfahren kann mit Hilfe der Übergangsmetallverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Übergangsmetallverbindung zunächst mit dem Träger und anschließend mit dem Cokatalysator umgesetzt werden. Es kann auch zunächst der Cokatalysator geträgert werden und anschließend mit der Übergangsmetallverbindung umgesetzt werden. Auch ist es möglich das Reaktionsprodukt von Übergangsmetallverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP-A-567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Möglichkeiten der Herstellung eines geträgerten Cokatalysators sind in EP-A-578 838 beschrieben.

Hierzu kann die erfindungsgemäße Übergangsmetallverbindung auf den geträgerten Cokatalysator aufgebracht werden, indem die gelöste Übergangsmetallverbindung mit dem geträgerten Cokatalysator gerührt wird. Das Lösemittel wird entfernt und durch einen Kohlenwasserstoff ersetzt, in dem sowohl Cokatalysator als auch die Übergangsmetallverbindungen unlöslich sind.

Die Reaktion zu dem geträgerten Katalysatorsystem erfolgt bei einer Temperatur von -20 bis + 120°C, bevorzugt 0 bis 100°C, besonders bevorzugt bei 15 bis 40°C. Die Übergangsmetallverbindung wird mit geträgerten Cokatalysator bevorzugt in der Weise umgesetzt, daß der Cokatalysator als Suspension mit 1 bis 40 Gew.-%, bevorzugt mit 5 bis 20 Gew.-%, in einem aliphatischen, inerten Suspensionsmittel wie n-Decan, Hexan, Heptan, Dieselöl mit einer Lösung der Übergangsmetallverbindung in einem inerten Lösungsmittel wie Toluol, Hexan, Heptan, Dichlormethan oder mit dem feingemahlenen Feststoff der Übergangsmetallverbindung zusammengebracht wird. Umgekehrt kann auch eine Lösung der Übergangsmetallverbindung mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.

Im Laufe der Reaktionszeit zur Herstellung des geträgerten Katalysatorsystems treten insbesondere bei der Verwendung der erfindungsgemäßen Übergangsmetallverbindung mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslicher Übergangsmetallverbindungen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend die erfindungsgemäße Übergangsmetallverbindung und einen geträgerten Cokatalysator kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (bspw. zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösungsmittel verwendet, werden die Monomeren bevorzugt gasförmig oder flüssig zudosiert.

Die in der vorliegenden Erfindung beschriebenen speziellen stereorigiden Übergangsmetallverbindungen eignen sich zur Herstellung von Polyolefinen. Diese sind insbesondere zur Herstellung von Formkörpern wie Folien, Platten oder Großhohlkörpern (z.B. Rohre) geeignet und können auch als Weichmacherund Gleitmittelrezepturen, Schmelzkleberanwendungen, Beschichtungen, Abdichtungen, Isolierungen, Ausgießmassen oder Schalldämmungsmaterialien verwendet werden.

## Patentansprüche

1. Stereorigide Übergangsmetallverbindung welche die Formel I aufweist 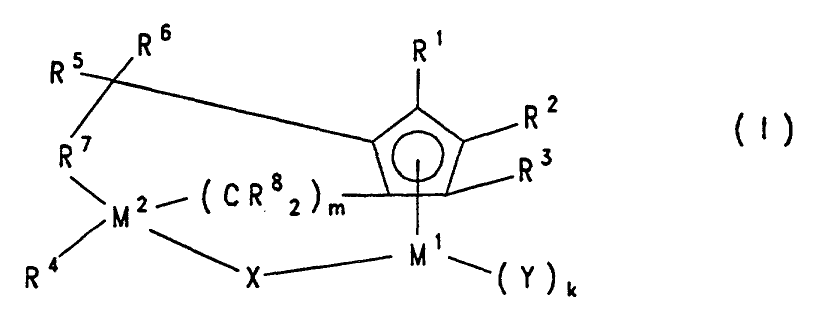 worin
M¹ ein Metall der Gruppe IIIb, IVb, Vb oder VIb des Periodensystems der Elemente ist,
M² Kohlenstoff, Silizium, Germanium oder Bor ist,
X ein gegebenenfalls substituiertes Heteroatom ist,
Y gleich oder verschieden sind und ein Wasserstoffatom, eine C₁-C₄₀-kohlenstoffhaltige Gruppe, eine OH-Gruppe, ein Halogenatom oder -NR⁹₃, worin R⁹ ein Halogenatom, eine C₁-C₁₀ Alkylgruppe oder eine C₆-C₁₀-Arylgruppe ist, bedeuten,
k eine ganze Zahl ist, die der Wertigkeit des Übergangsmetallatoms M¹ minus zwei entspricht,
R¹, R² und R³ gleich oder verschieden sind und ein Wasserstoffatom, ein Halogenatom, eine C₁-C₂₀-kohlenstoffhaltige Gruppe, einen -SiR⁹₃-, NR⁹₂-, -Si(OR⁹)₃-, Si(SR⁹)₃- oder -PR⁹₂-Rest bedeuten, worin R⁹ ein Halogenatom, eine C₁-C₁₀-Alkylgruppe oder eine C₆-C₁₀ Arylgruppe ist, oder zwei oder mehr benachbarte Reste R¹, R² und R³ zusammen mit den sie verbindenden Atomen ein Ringsystem bilden,
R⁴ ein Wasserstoffatom oder eine C₁-C₄₀-kohlenstoffhaltige Gruppe ist,
R⁷ 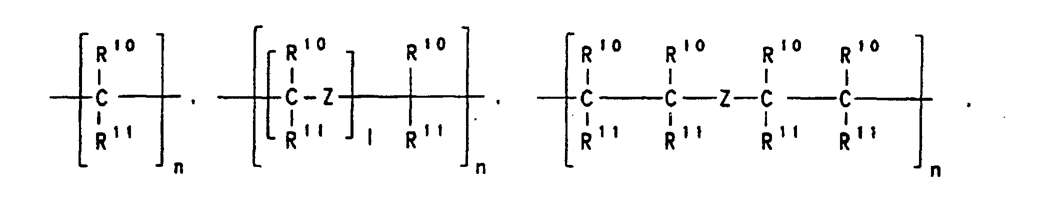 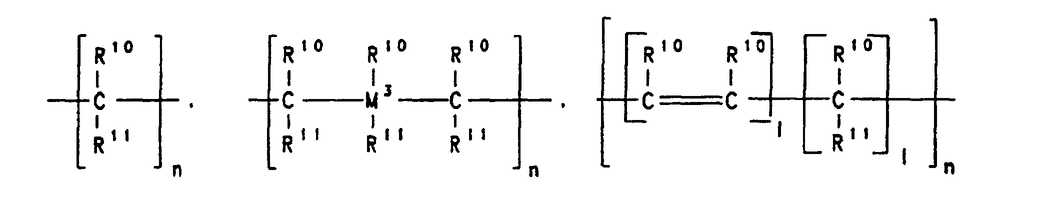 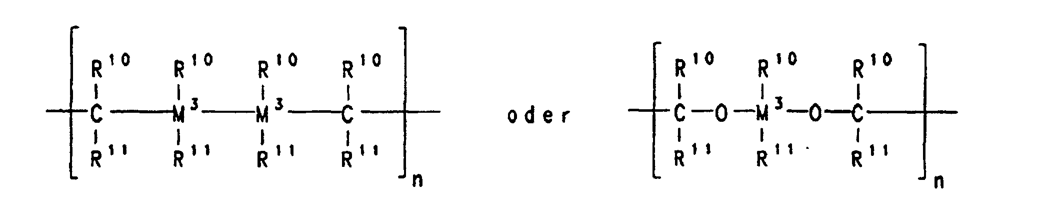 ist, wobei n eine ganze Zahl von 1 bis 20 ist, l ein ganze Zahl von 0 bis 20 ist,
Z gleich O, =NR⁹, =CO, =PR⁹, =P(O)R⁹, =SO, =SO² oder S ist, worin R⁹ ein Halogenatom, eine C₁-C₁₀-Alkylgruppe oder eine C₆-C₁₀-Arylgruppe ist,
R¹⁰ und R¹¹ gleich oder verschieden sind und ein Wasserstoffatom, ein Halogenatom, oder eine C₁-C₄₀-kohlenstoffhaltige Gruppe bedeuten oder jeweils zwei Reste R¹⁰, jeweils zwei Reste R¹¹, oder je einen Rest R¹⁰ und R¹¹ jeweils mit den sie verbindenden Atomen einen oder mehrere Ringe bilden, und M³ Silizium, Germanium oder Zinn ist,
R⁵ und R⁶ gleich oder verschieden sind und ein Wasserstoffatom oder eine C₁-C₄₀-kohlenstoffhaltige Gruppe bedeuten,
R⁸ gleich oder verschieden sind und ein Wasserstoffatom, ein Halogenatom oder eine C₁-C₄₀-kohlenstoffhaltige Gruppe bedeuten, oder einer oder mehr Reste R⁸ mit einem oder mehr Resten R⁴, R⁵, R⁶ und R⁷ verbunden sind, und m eine ganze Zahl von 0 bis 24 ist.

2. Stereorigide Übergangsmetallverbindung gemäß Anspruch 1, worin
M¹ Titan, Zirkonium oder Hafnium ist,
X gleich NR⁹, NR⁹₂, PR⁹₂ oder PR⁹ ist, worin R⁹ eine C₁-C₄-Alkylgruppe oder eine C₆-C₁₀-Arylgruppe bedeutet,
Y gleich sind und eine C₁-C₄-Alkylgruppe oder ein Halogenatom bedeuten, R¹, R² und R³ gleich oder verschieden sind und ein Wasserstoffatom, eine C₁-C₁₀-Alkylgruppe oder eine C₆-C₂₀-Arylgruppe sind, oder zwei benachbarte Reste R¹, R² und R³ zusammen mit den sie verbindenden Atomen ein aromatisches oder aliphatisches Kohlenwasserstoffringsystem bilden,
R⁴ ein Wasserstoffatom, eine C₆-C₂₀-Arylgruppe oder eine C₁-C₁₀-Alkylgruppe ist,
R⁷ 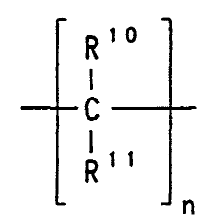 ist, wobei n eine ganze Zahl von 1 bis 8 ist, R¹⁰ und R¹¹ gleich oder verschieden sind und Wasserstoff oder eine C₁-C₁₀-Alkylgruppe sind, oder jeweils zwei Reste R¹⁰, jeweils zwei Reste R¹¹, oder je ein Rest R¹⁰ und R¹¹ zusammen mit den sie verbindenden Atomen ein Kohlenwasserstoffringsystem bilden,
M² Kohlenstoff ist,
R⁵ und R⁶ gleich oder verschieden sind und ein Wasserstoffatom, eine C₁-C₁₀-Alkylgruppe oder eine C₆-C₁₀-Arylgruppe bedeuten und m = 0 ist.

3. Stereorigide Übergangsmetallverbindung gemäß Anspruch 1 oder 2, worin
M¹ Zirkonium ist, X gleich NR⁹ ist, worin R⁹ eine C₁-C₄-Alkylgruppe wie Methyl, Ethyl, Propyl, Isopropyl, Butyl oder Isobutyl ist,
Y gleich sind und ein Halogenatom bedeuten,
R¹, R² und R³ gleich oder verschieden sind und Wasserstoff, eine C₁-C₄-Alkylgruppe oder eine C₆-C₁₄-Arylgruppe bedeuten, oder R¹ und R² oder R² und R³ mit den sie verbindenden Atomen ein aromatisches Kohlenwasserstoffringsystem bilden,
M² ein Kohlenstoffatom ist,
R⁴ eine C₁-C₆-Alkylgruppe oder eine C₆-C₂₀-Arylgruppe ist,
R¹¹ -CH₂- oder -CH₂-CH₂- ist,
R⁵ und R⁶ gleich oder verschieden sind und eine Methylgruppe, eine Phenylgruppe oder Wasserstoff bedeuten und m = 0 ist.

4. Katalysator, enthaltend mindestens eine stereorigide Übergangsmetallverbindung gemäß einem oder mehreren der Ansprüche 1 bis 3 und mindestens einen Cokatalysator.

5. Katalysator gemäß Anspruch 4, worin der Cokatalysator eine Aluminiumverbindung und/oder eine Borverbindung ist.

6. Verfahren zur Herstellung eines Polyolefins durch Polymerisation eines oder mehrerer Olefine in Gegenwart eines Katalysators gemäß Anspruch 4 oder 5.

7. Verfahren gemäß Anspruche 6, wobei eines oder mehrere Olefine der Formel R^{a}-CH=CH-R^{b} polymerisiert werden, worin R^{a} und R^{b} gleich oder verschieden sind und ein Wasserstoffatom oder einen Kohlenwasserstoffrest mit 1 bis 20 C-Atomen bedeuten, oder R^{a} und R^{b} zusammen mit den sie verbindenden Atomen einen oder mehrere Ringe bilden.

8. Verwendung einer stereorigiden Übergangsmetallverbindung gemäß einem oder mehreren der Ansprüche 1 bis 3 zur Olefinpolymerisation.

## Claims

1. A stereorigid transition metal compound which has the formula I 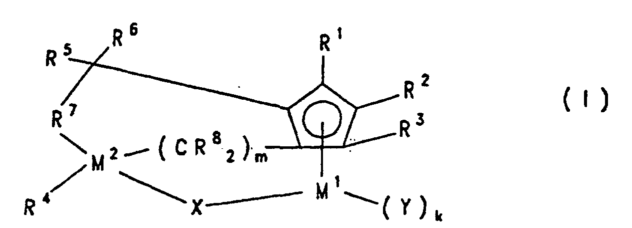 where
M¹ is a metal of group IIIb, IVb, Vb or VIb of the Periodic Table of the Elements,
M² is carbon, silicon, germanium or boron,
X is a substituted or unsubstituted heteroatom,
Y are identical or different and are each a hydrogen atom, a C₁-C₄₀ group, an OH group, a halogen atom or -NR⁹₃, where R⁹ is a halogen atom, a C₁-C₁₀-alkyl group or a C₆-C₁₀-aryl group,
k is an integer which corresponds to the valence of the transition metal atom M¹ minus two,
R¹, R² and R³ are identical or different and are each a hydrogen atom, a halogen atom, a C₁-C₂₀ group, an -SiR⁹₃, NR⁹₂, -Si(OR⁹)₃, Si(SR⁹)₃ or -PR⁹₂ radical, where R⁹ is a halogen atom, a C₁-C₁₀-alkyl group or a C₆-C₁₀-aryl group,
or two or more adjacent radicals R¹, R² and R³ together with the atoms connecting them form a ring system,
R⁴ is a hydrogen atom or a C₁-C₄₀ group,
R⁷ is 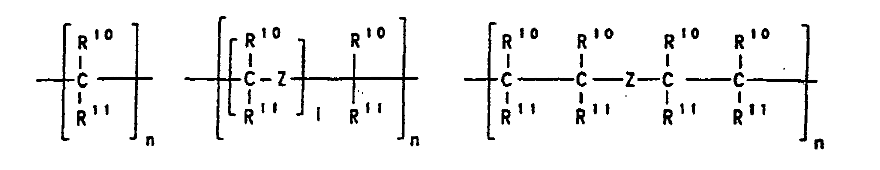 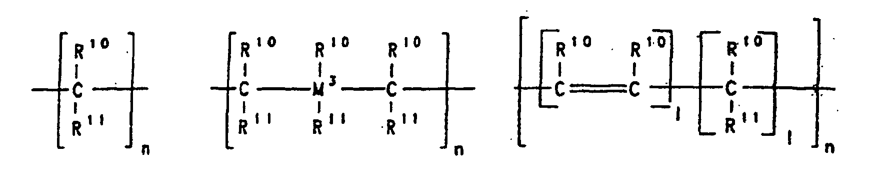 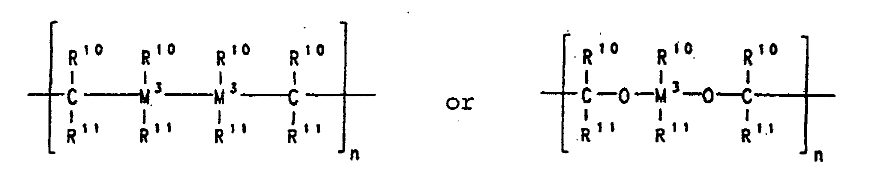 where n is an integer from 1 to 20, l is an integer from 0 to 20, Z is O, =NR⁹, =CO, =PR⁹, =P(O)R⁹, =SO, =SO² or S, where R⁹ is a halogen atom, a C₁-C₁₀-alkyl group or a C₆-C₁₀-aryl group,
R¹⁰ and R¹¹ are identical or different and are each a hydrogen atom, a halogen atom or a C₁-C₄₀ group or two radicals R¹⁰, two radicals R¹¹ or one radical R¹⁰ and one radical R¹¹, in each case together with the atoms connecting them, form one or more rings, and M³ is silicon, germanium or tin,
R⁵ and R⁶ are identical or different and are each a hydrogen atom or a C₁-C₄₀ group,
R⁸ are identical or different and are each a hydrogen atom, a halogen atom, or a C₁-C₄₀ group, or one or more radicals R⁸ are joined to one or more radicals R⁴, R⁵, R⁶ and R⁷,
and m is an integer from 0 to 24.

2. A stereorigid transition metal compound as claimed in claim 1, wherein
M¹ is titanium, zirconium or hafnium,
X is NR⁹, NR⁹₂, PR⁹₂ or PR⁹, where R⁹ is a C₁-C₄-alkyl group or a C₆-C₁₀-aryl group,
Y are identical and are each a C₁-C₄-alkyl group or a halogen atom,
R¹, R² and R³ are identical or different and are each a hydrogen atom, a C₁-C₁₀-alkyl group or a C₆-C₂₀-aryl group, or two adjacent radicals. R¹, R² and R³ together with the atoms connecting them form an aromatic or aliphatic hydrocarbon ring system,
R⁴ is a hydrogen atom, a C₆-C₂₀-aryl group or a C₁-C₁₀-alkyl group,
R⁷ is 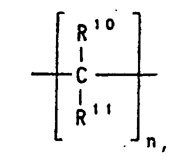 where n is an integer from 1 to 8, R¹⁰ and R¹¹ are identical or different and are each hydrogen or a C₁-C₁₀-alkyl group, or two radicals R¹⁰, two radicals R¹¹ or one radical R¹⁰ and one radical R¹¹ together with the atoms connecting them form a hydrocarbon ring system,
M² is carbon,
R⁵ and R⁶ are identical or different are each a hydrogen atom, a C₁-C₁₀-alkyl group or a C₆-C₁₀-aryl group and m = 0.

3. A stereorigid transition metal compound as claimed in claim 1 or 2, wherein
M¹ is zirconium, X is NR⁹, where R⁹ is C₁-C₄-alkyl group such as methyl, ethyl, propyl, isopropyl, butyl or isobutyl,
Y are identical and are each a halogen atom,
R¹, R² and R³ are identical or different and are each hydrogen, a C₁-C₄-alkyl group or a C₆-C₁₄-aryl group, or R¹ and R² or R² and R³ together with the atoms connecting them form an aromatic hydrocarbon ring system,
M² is a carbon atom,
R⁴ is a C₁-C₆-alkyl group or a C₆-C₂₀-aryl group,
R¹¹ is -CH₂- or -CH₂-CH₂-,
R⁵ and R⁶ are identical or different and are each a methyl group, a phenyl group or hydrogen and m = 0.

4. A catalyst comprising at least one stereorigid transition metal compound as claimed in one or more of claims 1 to 3 and at least one cocatalyst.

5. A catalyst as claimed in claim 4, wherein the cocatalyst is an aluminum compound and/or a boron compound.

6. A process for preparing a polyolefin by polymerization of one or more olefins in the presence of a catalyst as claimed in claim 4 or 5.

7. The process as claimed in claim 6, wherein one or more olefins of the formula R^{a}-CH=CH-R^{b}, where R^{a} and R^{b} are identical or different and are each a hydrogen atom or a hydrocarbon radical having from 1 to 20 carbon atoms, or R^{a} and R^{b} together with the atoms connecting them form one or more rings, are polymerized.

8. The use of a stereorigid transition metal compound as claimed in one or more of claims 1 to 3 for olefin polymerization.

## Revendications

1. Composé de métal de transition stéréorigide présentant la formule générale I 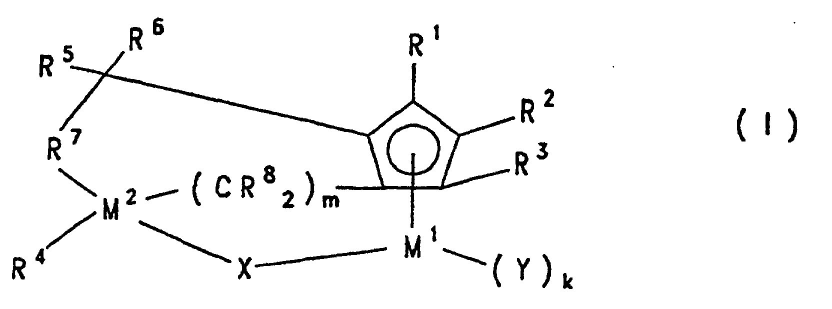 dans laquelle
M¹ représente un atome métallique du Groupe IIIb, IVb, Vb ou VIb de la Classification Périodique des Eléments,
M² représente un atome de carbone, de silicium, de germanium ou de bore,
X représente un hétéroatome qui est éventuellement substitué,
Y sont identiques ou différents et représentent un atome d'hydrogène, un groupe carboné en C₁ à C₄₀, un groupe OH, un atome d'halogène ou un reste - NR⁹₃, formule dans laquelle R⁹ représente un atome d'halogène, un groupe alkyle en C₁ à C₁₀ ou aryle en C₆ à C₁₀,
k représente un nombre entier correspondant à la valence de l'atome de transition M¹ moins 2,
R¹, R² et R³ sont identiques ou différents et représentent un atome d'hydrogène ou d'halogène, un groupe carboné en C₁ à C₂₀, un reste -SiR⁹₃-, -NR⁹₂, -Si (OR⁹)₃-, -Si(SR⁹)₃- ou -PR⁹₂-, formules dans lesquelles R⁹ représente un atome d'halogène, un groupe alkyle en C₁ à C₁₀ ou aryle en C₆ à C₁₀, ou bien deux ou plusieurs restes vicinaux R¹, R² et R³ et les atomes qui les lient forment conjointement un système cyclique,
R⁴ représente un atome d'hydrogène ou un groupe carboné en C₁ à C₄₀,
R⁷ représente 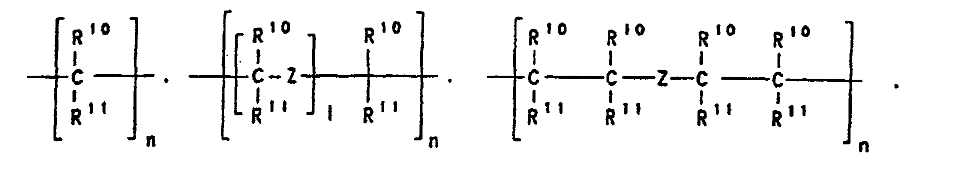 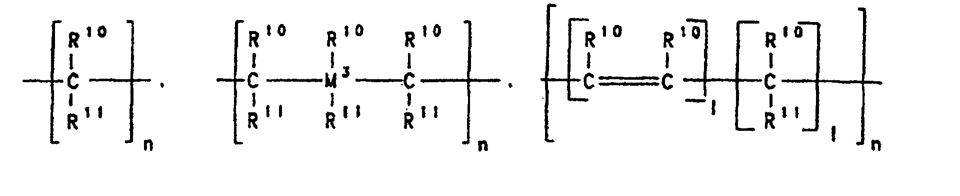 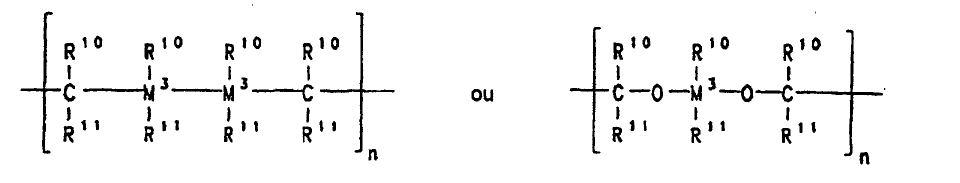 où n représente un nombre entier allant de 1 à 20, l représente un nombre entier allant de 0 à 20, Z représente un atome de O, un reste =NR⁹, =CO, =PR⁹, =P(O)R⁹, =SO, =SO² ou un atome de S, formules dans lesquelles R⁹ représente un atome d'halogène, un groupe alkyle en C₁ à C₁₀ ou aryle en C₆ à C₁₀,
R¹⁰ et R¹¹ sont identiques ou différents et représentent un atome d'hydrogène, un atome d'halogène, un groupe carboné en C₁ à C₄₀ ou bien deux restes R¹⁰, deux restes R¹¹, ou un reste R¹⁰ et un reste R¹¹, et les atomes qui les lient respectivement, forment conjointement un ou plusieurs cycles, et M³ représente un atome de silicium, de germanium ou d'étain,
R⁵ et R⁶ sont identiques ou différents et représentent un atome d'hydrogène ou un groupe carboné en C₁ à C₄₀,
R⁸ sont identiques ou différents et représentent un atome d'hydrogène ou d'halogène ou un groupe carboné en C₁ à C₄₀, ou bien un ou plusieurs des restes R⁸ est lié à un ou à plusieurs des restes R⁴, R⁵, R⁶ et R⁷,
et m représente un nombre entier allant de 0 à 24.

2. Composé de métal de transition stéréorigide selon la revendication 1, **caractérisée en ce que**
M¹ représente un atome de titane, de zirconium ou d'hafnium,
X représente un groupe NR⁹, NR⁹₂, PR⁹₂ ou PR⁹, formules dans lesquelles R⁹ représente un groupe alkyle en C₁ à C₄ ou aryle en C₆ à C₁₀,
Y sont identiques et représentent un groupe alkyle en C₁ à C₄ ou un atome d'halogène,
R¹, R² et R³ sont identiques ou différents et représentent un atome d'hydrogène, un groupe alkyle en C₁ à C₁₀ ou aryle en C₆ à C₂₀, ou bien deux des restes R¹, R² et R³ vicinaux, et les atomes qui les lient, forment conjointement un système hydrocarbure cyclique aromatique ou aliphatique,
R⁴ représente un atome d'hydrogène, un groupe aryle en C₆ à C₂₀ ou alkyle en C₁ à C₁₀,
R⁷ représente 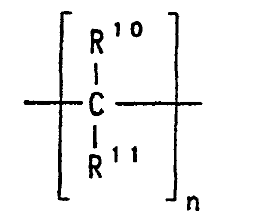 où n représente un nombre entier allant de 1 à 8, R¹⁰ et R¹¹ sont identiques ou différents et représentent un atome d'hydrogène ou un groupe alkyle en C₁ à C₁₀, ou bien deux restes R¹⁰, deux restes R¹¹, ou un reste R¹⁰ et un reste R¹¹, et les atomes qui les lient respectivement, forment conjointement un système hydrocarbure cyclique,
M² représente un atome de carbone,
R⁵ et R⁶ sont identiques ou différents et représentent un atome d'hydrogène, un groupe alkyle en C₁ à C₁₀ ou aryle en C₆ à C₁₀, et
m vaut 0.

3. Composé de métal de transition stéréorigide selon la revendication 1 ou 2, **caractérisé en ce que**
M¹ représente un atome de zirconium,
X représente un reste NR⁹ dans lequel R⁹ représente un groupe alkyle en C₁ à C₄ tel que le groupe méthyle, éthyle, propyle, isopropyle, butyle ou isobutyle,
Y sont identiques et représentent un atome d'halogène,
R¹, R² et R³ sont identiques ou différents et représentent un atome d'hydrogène, un groupe alkyle en C₁ à C₄ ou aryle en C₆ à C₁₄, ou bien R¹ et R² ou R² et R³, et les atomes qui les lient, forment conjointement un système hydrocarbure cyclique aromatique,
M² représente un atome de carbone,
R⁴ représente un groupe alkyle en C₁ à C₆ ou aryle en C₆ à C₂₀,
R₁₁ représente un groupe -CH₂- ou -CH₂-CH₂-,
R⁵ et R⁶ sont identiques ou différents et représentent un groupe méthyle, phényle ou un atome d'hydrogène, et m vaut 0.

4. Catalyseur comprenant au moins un composé de métal de transition stéréorigide selon l'une ou plusieurs des revendications 1 à 3 et au moins un cocatalyseur.

5. Catalyseur selon la revendication 4, **caractérisé en ce que** le cocatalyseur est un composé de l'aluminium et/ou un composé du bore.

6. Procédé de préparation de polyoléfines au moyen d'une polymérisation d'une ou de plusieurs oléfines en présence d'un catalyseur selon la revendication 4 ou 5.

7. Procédé selon la revendication 6, lors duquel on soumet à une polymérisation une ou plusieurs oléfines de formule R^{a}-CH=CH-R^{b}, formule dans laquelle R^{a} et Rb sont identiques ou différents et représentent un atome d'hydrogène ou un reste hydrocarbure présentant 1 à 20 atomes de C, ou bien R^{a} et R^{b} et les atomes qui les lient forment conjointement un ou plusieurs cycles.

8. Mise en oeuvre du composé de métal de transition stéréorigide selon une ou plusieurs des revendications 1 à 3, pour la polymérisation d'oléfines.
